# NEW EUROPEAN PATENT SPECIFICATION

(11) **EP 1 475 171 B2**
(45) Date of publication and mention of the opposition decision: **15.10.2014**
(45) Mention of the grant of the patent: 08.10.2008
(21) Application number: 04445052.6
(22) Date of filing: 04.05.2004
(51) Int. Cl.: B23B 27/14

(54) **Cutting insert for turning**
Schneidplatte zum Drehen
Plaquette de coupe pour tourner

(30) Priority: 08.05.2003 SE 0301323
(43) Date of publication of application: 10.11.2004
(73) Proprietor: Sandvik Intellectual Property AB, 811 81 Sandviken (SE)
(72) Inventor: Löf, Ronnie, 81141 Sandviken (SE); Mills, Chris, 81135 Sandviken (SE); Thordenberg, Hans, 80336 Gävle (SE); Wiman, Jörgen, 81152 Sandviken (SE)
(74) Representative: WSL Patentanwälte Partnerschaft mbB

(56) References cited:
- EP-A- 1 157 768
- DE-U1- 9 400 327
- GB-A- 951 624
- US-A- 3 466 720
- US-A- 5 503 509
- US-A- 5 921 721
- US-A- 5 951 215
- US-A1- 2002 127 068
- PATENT ABSTRACTS OF JAPAN vol. 2000, no. 02, 29 February 2000 (2000-02-29) -& JP 11 309608 A (MITSUBISHI MATERIALS CORP; YOSHIKAWA KOGYO CO LTD), 9 November 1999 (1999-11-09)
- PATENT ABSTRACTS OF JAPAN vol. 2002, no. 03, 3 April 2002 (2002-04-03) -& JP 2001 315003 A (ASAHI OPTICAL CO LTD), 13 November 2001 (2001-11-13)

## Description

### Technical Field of the Invention

This invention relates to a turning insert of the type that comprises a top surface, a bottom surface and a corner area between two side surfaces, which transform into at least the top surface via a pair of side edges and converge towards a free end of the corner area so as to define a nose angle in the range of 30-85°

### Prior Art

So-called abrasive jet wear of the major cutting edge of turning inserts used for turning operations is a problem that the experts have tried to solve in a number of different ways. Generally, at a smaller setting angle, a smaller degree of abrasive jet wear is obtained.

According to one variant, square turning inserts are used, the setting angle being determined at 45°.

According to another variant, round turning inserts are used, the cutting depth in such a case normally being limited to approx. 25 % of the diameter of the insert.

According to an additional variant, turning inserts having a relatively large corner radius are used, the cutting depth in such a case being limited to approx. 30 % of the corner radius. This is suitable in finishing operations but for roughing operations, a larger cutting depth is generally required.

### Objects and Features of the Invention

Primary objects of the present invention is to provide a turning insert which during chip-removing machining exhibits a reduced abrasive jet wear of the chip-removing cutting edge , in comparison with known turning inserts, and which generate a fillet in which a reduced quantity of material will be left after finalized machining.

Another object is to provide a turning insert by means of which machining can be effected in two directions perpendicular to each other with one and the same chip-removing edge.

At least the primary object of the present invention is realised by means of the features defined in the characterizing clause of independent claim 1. Preferred embodiments of the invention are furthermore stated in dependent claims 2-7.

### Brief Description of the Drawings

Below, preferred embodiments of the cutting insert according to the present invention will be described, reference being made to the accompanying drawings, in which:
Fig. 1 is a perspective view showing an embodiment of a turning insert according to the present invention;
Fig. 2 is a schematic planar view showing, on an enlarged scale, a corner of the turning insert according to Fig. 1;
Fig. 3 is a schematic view showing a comparison between an active corner of a turning insert according to the invention and an active corner of a turning insert according to the prior art;
Fig. 4 is a perspective view showing an alternative embodiment of a turning insert according to the invention;
Fig. 5 is a schematic planar view of a corner of the turning insert according to Fig. 4;
Fig. 6 is a schematic planar view of a corner of an additional alternative embodiment of a turning insert according to the invention; and
Fig. 7 is a similar view showing another alternative embodiment.

### Detailed Description of Preferred Embodiments of the Invention

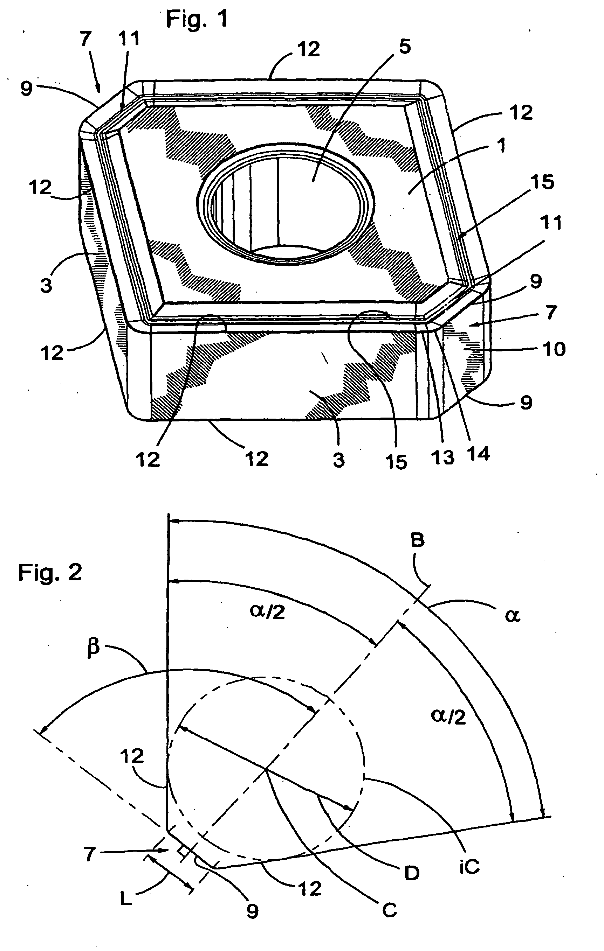

The turning insert according to Fig. 1 has a generally negative cutting geometry, and comprises two cutting surfaces 1 in the form of top and bottom surfaces, which are spaced apart and parallel to each other. In Fig. 1, only one of the cutting surfaces 1, viz. the top surface is visible. The cutting surfaces 1 are interconnected by means of four side surfaces 3, which, since the turning insert is negative, generally have an extension perpendicular to the cutting geometry surfaces 1. Only two side surfaces 3 are visible in Fig. 1.

Furthermore, the cutting insert shown in Fig. 1 has a center hole 5, which is intended to receive a screw or the like in order to anchor the insert in a seat of a holder (not shown).

In the usual way the insert may be manufactured from a hard material, such as cemented carbide, ceramics, cubic boron nitride and diamond.

Below, the parts of the turning insert located in connection with the cutting geometry surface 1 shown in Fig. 1 will be described, wherein it should be pointed out that the cutting surface not visible in Fig. 1 is identically formed to the one which is visible. Adjacent to the cutting surface 1 of the turning insert according to Fig. 1, two diametrically located corner areas 7 are arranged, which constitute the basis of the present invention. Each corner area 7 comprises, in the embodiment illustrated, a rectilinear bevelled edge 9, which constitutes a major cutting edge in use of the turning insert. Adjacent to this major cutting edge 9, there is a clearance surface 10, which generally has an extension between the two identical cutting edges 9. Inside each cutting edge 9, a chip breaker 11 is arranged, which will not be described in detail since it can have different designs within the scope of the present invention.

Each side surface 3 includes two longitudinal side edges 12, which are mutually parallel and connected, at one end thereof, to an adjacent cutting edge 9. In the embodiment shown in Fig. 1, said connection takes place via so-called wiper technology, i.e. there are provided radiused wiper edge segments 13, 14 which define a transition between the cutting edge 9 and the side edges 12, and which have different respective radii of curvature.

As seen in Fig. 1, the portions 15 located inside the side edges 12 have in principle the same design as the chip breaker 11. However, said portions 15 do not exert any chip breaking function.

Fig. 2 is a schematic planar view showing a corner area 7 of the turning insert according to Fig. 1. In this view the nose angle α of the corner area 7, i.e. the angle between the side edges 12, is by means of a bisector B divided into two equally large angles α/2. In this case α = 80°. The bisector B intersects the cutting edge 9 at the center thereof, i.e. the parts of the cutting edge 9 located on both sides of the bisector B are equally long. The bisector B intersects the cutting edge 9 at a right angle, which in Fig. 2 is defined by the fact that the angle β, between the bisector B and an extension of the cutting edge 9, has a value of 90°. The length of the cutting edge 9 has been designated L.

In Fig. 2 an imaginary inscribed circle iC in the form of a dashed line, is tangent to the two side edges 12 disposed on opposite sides of the corner region. The center C of the inscribed circle iC coincides with the centre of the hole 5 in Fig. 1., and is disposed midway between the opposite corner areas 7, and thus touches all of the four side edges 12.

By studying Fig. 2, it is realized that the turning insert shown in Fig. 1 is symmetrical with respect to the bisector B.

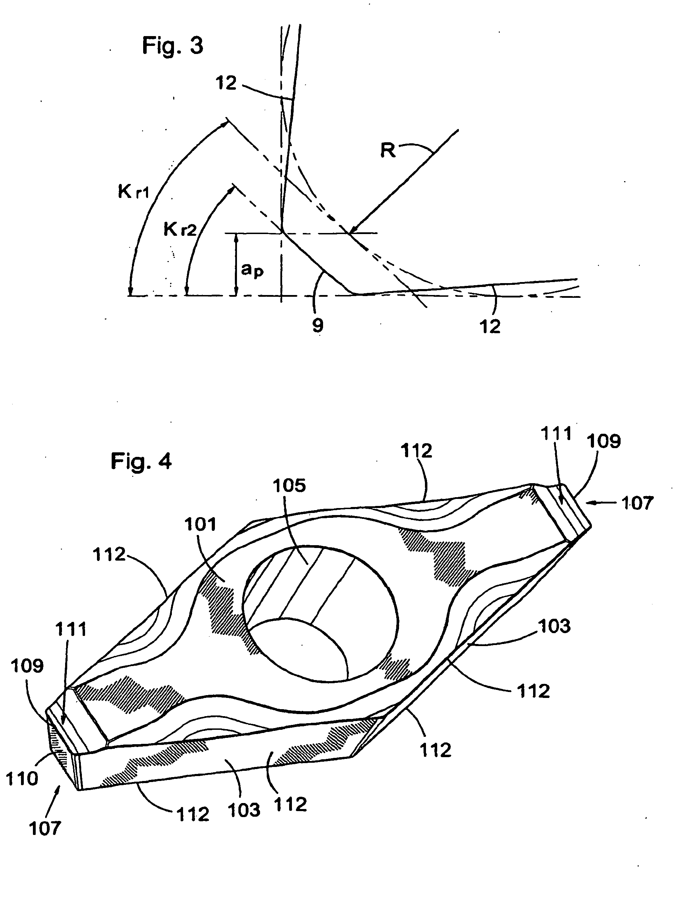

In Fig. 3, a comparison is illustrated in turning by means of the insert according to Fig. 1 and a conventional turning insert having a corner radius R. The cutting depth aₚ in question is equal for the two inserts, meaning that the cutting depth ap is approx. 0.3 x R if a setting angle Kᵣ₁ of 45° is to be obtained for the conventional turning insert. As is seen in Fig. 3, the corresponding cutting depth ap is obtained for the turning insert according to Figs. 1 and 2, the setting angle Kᵣ₂ also in this case being 45°. By studying Fig. 3, it is realized that the turning insert according to the invention leaves substantially less material in the fillet than the conventional turning insert. It will also be appreciated by studying Figs. 2 and 3 that the turning insert according to Fig. 1 can be used for turning in two directions perpendicular to each other without the location of the insert in the holder having to be changed.

In Fig. 4, an alternative embodiment is shown of a turning insert according to the invention. This insert is intended for copying and has generally a positive geometry. Thus, it has a top cutting surface 101 as well as a bottom support surface (not visible), the cutting surface 101 and the support surface being parallel to each other and interconnected by means of four side surfaces 103. Since the insert is positive, the side surfaces 103 connect to the cutting geometry surface 101 under an acute angle while the side surfaces 103 connect to the support surface under an obtuse angle. Only two side surfaces 103 are visible in Fig. 4. As in Fig. 1, the turning insert shown in Fig. 4 has a center hole 105 for receiving a screw.

Below the corner areas 107 of the turning insert of Fig. 4 will be described. Each corner area 107 comprises a rectilinear major cutting edge 109 along a clearance surface 110. Inside each rectilinear cutting edge 109 a chip breaker 111 is arranged. Each side surface 103 includes two longitudinal side edges 112, which are mutually parallel and connected at one end thereof to the adjacent cutting edge 109, more specifically via a wiper edge of the type described above in connection with Fig. 1.

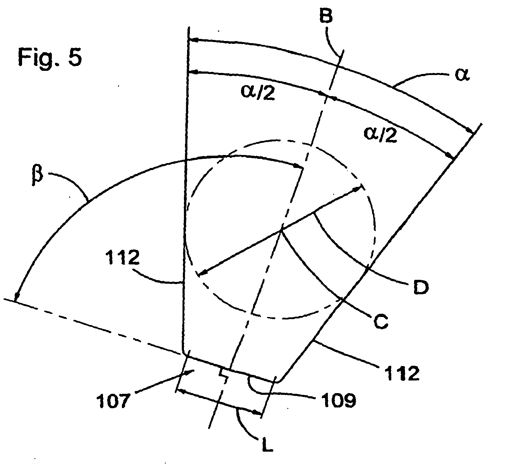

Fig. 5 illustrates the corner area 107 of the turning insert according to Fig. 4. The nose angle α of this corner area 107, i.e. the angle between the side edges 112, is in this case 35°. As before, the bisector B intersects the cutting edge 109 at the centre thereof, i.e. the parts of the edge 109 located on both sides of the bisector B are equally long and the bisector B intersects the edge 109 at a right angle. Furthermore, the center C of the inscribed circle iC coincides with the center of the center hole 105, the circle touching all four side edges 112. The turning insert of Figs. 4 and 5 is symmetrical with respect to the bisector B.

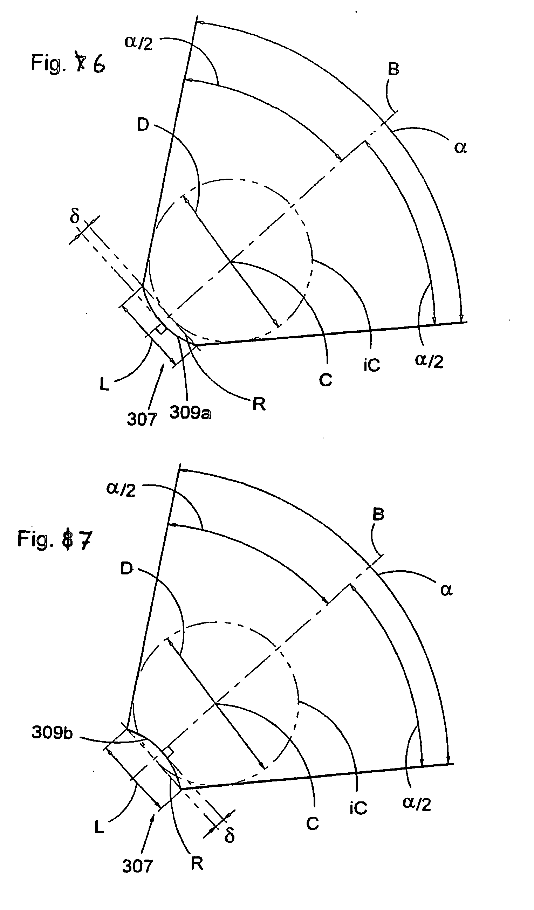

Figs. 6 and Fig. 7 illustrate corner areas 307 of additional alternative embodiments of the present invention, wherein the cutting edges 309a and 309b are either convexly curved 309a (Fig. 6) or concavely curved (Fig. 7). For reasons of clarity, the bending of the edges 309a, 309b has been exaggerated. The distance between the reference line R and the point of the respective edge 309a, 309b located farthest away from the reference line R has in Fig. 6 and Fig. 7 been designated 5. The length L of the edges 309a; 309b is defined as the rectilinear distance between the end points thereof. Within the scope of the present invention, the maximum value for δ/L is 0.15. The bisector B intersects the edge 309a, 309b at the center thereof, i.e. the parts of each edge 309a, 309b located on both sides of the bisector B are equally long. The bisector B intersects the edge 309a, 309b at a right angle, which is marked in Figs. 6 and 7.

The above-described embodiments of turning inserts are preferably intended for machining high-temperature materials. However, the principles of the present invention may also be applied to inserts for hard turning, in such a case the major cutting edge obtaining a relatively seen substantially smaller length.

Generally, in turning inserts according to the present invention, the following relation between the length L of the major cutting edge 9; 109; 209 and the diameter D of the inscribed circle iC applies: 0.01 < L/D < 0.45. As for turning inserts intended for machining high-temperature materials the more specified relation 0.1 < L/D < 0.45 applies. As for inserts for hard turning, the more specified relation 0.01 < L/D < 0.1 applies.

### Feasible Modifications of the Invention

The above-described embodiments of the turning insert according to the present invention have center holes for clamping the insert in a holder, However, according to the invention, the same may also be clamped by means of a clamp making a hole unnecessary. In that event, the inscribed circle iC of Fig. 5 would have its center lying on the bisector B at a location midway between opposite corner areas that are bisected by the bisector B. In the case of a triangular insert (not shown) the inscribed circle iC would be located so as to touch all three main cutting edges. Instead of using wiper edges having different radii, it is also conceivable that the transition edge between the cutting edge 9; 109 and the connecting side edges 12; 112 is of a constant radius. The two described embodiments of the invention have generally a rhombic shape in planar view. However, within the scope of the present invention, it is also conceivable that the turning insert has a generally triangular shape in planar view. It is not necessary to provide the turning insert with any especially formed chip breaker, since a planar surface inside the cutting edge may constitute a chip breaker.

## Claims

1. A turning insert comprising a top surface (1) forming a cutting surface, a bottom surface parallel to said top surface and a corner area (7) between two side surfaces (3), which transform into at least the top surface (1) via a pair of side edges (12) and converge towards a free end of the corner area (7) so as to define a nose angle (α) in the range of 30-85°, **characterized in that** the corner area (7) includes a bevel, defined by a rectilinear major chip-removing cutting edge (9) having a certain length (L) and extending transversely between the two more precisely, along a clearance surface (10), side edges (12), while intersecting, at a midpoint between the ends thereof, a bisector (B) of the nose angle (α) at a right angle.

2. A turning insert comprising a top surface (1) forming a cutting surface, a bottom surface parallel to said top surface and a corner area (7) between two side surfaces (3), which transform into at least the top surface (1) via a pair of side edges (12) and converge towards a free end of the corner area (7) so as to define a nose angle (α) in the range of 30-85°, **characterized in that** the corner area (7) includes a bevel, defined by a concave or convex major chip-removing cutting edge (9) having a certain length (L) and extending transversely between the two more precisely, along a clearance surface (10), side edges (12), while intersecting, at a midpoint between the ends thereof, a bisector (B) of the nose angle (α) at a right angle, the height (δ )of the curved cutting edge (9) when compared to the length (L) thereof and measured parallel to said bisector (B), having a maximum value of δ/L = 0,15.

3. Turning insert according to claim 1, **characterized in that** the corner area (7) includes a chip breaker (11) disposed in at least the top surface (1) inwardly of the major cutting edge (9).

4. Turning insert according to claim 1 or 2, including a top surface along which two pairs of side edges (12) extend, an imaginary inscribed circle (iC), having a diameter (D) being tangent with all four side edges, **characterized in that** the ratio (L/D) between the length (L) of the major cutting edge (9) and the diameter (D) of the circle Is in the range of 0.01 to 0.45.

5. Turning insert according to any one of the preceding claims, **characterized In that** both ends of the major cutting edge (9) are connected to the side edges (12) by at least one circular wiper edge (13, 14).

6. Turning insert according to any one of the preceding claims, **characterized in that** the top surface (1) and the bottom surface are identical, and that the side surfaces as well as the clearance surface (10) extend perpendicularly therebetween.

## Patentansprüche

1. Einsatz zum Drehen mit einer Oberseite (1), die eine Schneidfläche bildet, einer Unterseite parallel zu der Oberseite und einem Eckbereich (7) zwischen zwei Seitenflächen (3), die zumindest in die Oberseite (1) über ein Paar von Seitenkanten (12) übergehen und in Richtung eines freien Endes des Eckbereichs (7) konvergieren, sodass sie einen Nasenwinkel (α) im Bereich von 30-85° definieren, **dadurch gekennzeichnet, dass** der Eckbereich (7) eine Abschrägung aufweist, die durch eine geradlinige, spanabhebende Hauptschneidkante (9) definiert wird, welche eine gewisse Länge (L) hat und sich quer zwischen den beiden Seitenkanten (12), genauer gesagt entlang einer Freifläche (10), erstreckt, wobei sie in der Mitte zwischen ihren Enden eine Winkelhalbierende (B) des Nasenwinkels (α) unter einem rechten Winkel schneidet.

2. Einsatz zum Drehen mit einer Oberseite (1), die eine Schneidfläche bildet, einer Unterseite parallel zu der Oberseite und einem Eckbereich (7) zwischen zwei Seitenflächen (3), die über ein Paar von Seitenkanten (12) zumindest in die Oberseite (1) übergehen und in Richtung eines freien Endes des Eckbereichs (7) konvergieren, sodass sie einen Nasenwinkel (α) im Bereich von 30-85° definieren, **dadurch gekennzeichnet, dass** der Eckbereich (7) eine Abschrägung aufweist, die durch eine konkave oder konvexe, spanabhebende Hauptschneidkante (9) definiert wird, welche eine gewisse Länge (L) hat und sich quer zwischen den beiden Seitenkanten (12), genauer gesagt entlang einer Freifläche (10), erstreckt, wobei sie in der Mitte zwischen ihren Enden eine Winkelhalbierende (B) des Nasenwinkels (α) unter einem rechten Winkel schneidet, wobei die Höhe (δ) der gekrümmten Schneidkante (9) gegenüber der Länge (L) derselben, gemessen parallel zu der Winkelhalbierenden (B), einen Wert von maximal δ/L=0,15 hat.

3. Einsatz nach Anspruch 1, **dadurch gekennzeichnet, dass** der Eckbereich (7) einen Spanbrecher (11) aufweist, der zumindest auf der Oberseite (1) einwärts von der Hauptschneidkante (9) angeordnet ist.

4. Einsatz nach Anspruch 1 oder 2 mit einer Oberseite, entlang welcher sich zwei Paare von Seitenkanten (12) erstrecken, einem gedachten, einbeschriebenen Kreis (IC), der einen Durchmesser (D) hat und der alle vier Seitenkanten tangential berührt, **dadurch gekennzeichnet, dass** das Verhältnis (L/D) zwischen der Länge (L) der Hauptschneidkante (9) und dem Durchmesser (D) des Kreises im Bereich von 0,01 bis 0,45 liegt.

5. Schneideinsatz nach einem der vorstehenden Ansprüche, **dadurch gekennzeichnet, dass** beide Enden der Hauptschneidkante mit den Seitenkanten (12) über zumindest eine kreisförmige Schlichtkante (13, 14) verbunden sind.

6. Einsatz zum Drehen nach einem der vorstehenden Ansprüche, **dadurch gekennzeichnet, dass** die Oberseite (1) und die Unterseite identisch sind und dass die Seitenflächen ebenso wie die Freifläche (10) sich senkrecht zwischen jenen erstrecken.

## Revendications

1. Plaquette de coupe pour tourner comprenant une surface supérieure (1) formant une surface de coupe, une surface inférieure parallèle à ladite surface supérieure et une zone de coin (7) entre deux surfaces latérales (3) qui se transforment en au moins la surface supérieure (1) via une paire de bords latéraux (12) et convergent vers une extrémité libre de la zone de coin (7) afin de définir un angle de nez (α) dans la plage allant de 30 à 85°, **caractérisée en ce que** la zone de coin (7) comprend un biseau, défini par une arête (9) de coupe principale rectiligne d'enlèvement de copeaux ayant une certaine longueur (L) et s'étendant de façon transversale entre les deux bords latéraux (12) et plus précisément le long d'une surface de dépouille (10), tout en coupant, en un point milieu entre ses extrémités, une bissectrice (B) de l'angle de nez (α) selon un angle droit.

2. Plaquette de coupe pour tourner comprenant une surface supérieure (1) formant une surface de coupe, une surface inférieure parallèle à ladite surface supérieure et une zone de coin (7) entre deux surfaces latérales (3) qui se transforment en au moins la surface supérieure (1) via une paire de bords latéraux (12) et convergent vers une extrémité libre de la zone de coin (7) afin de définir un angle de nez (α) dans la plage allant de 30 à 85°, **caractérisée en ce que** la zone de coin (7) comprend un biseau, défini par une arête (9) de coupe principale concave ou convexe d'enlèvement de copeaux ayant une certaine longueur (L) et s'étendant de façon transversale entre les deux bords latéraux (12) et plus précisément le long d'une surface de dépouille (10), tout en coupant, en un point milieu entre ses extrémités, une bissectrice (B) de l'angle de nez (α) selon un angle droit, la hauteur (δ) de l'arête (9) de coupe incurvée, lorsqu'elle est comparée à sa longueur (L) et mesurée parallèlement à ladite bissectrice (B), ayant une valeur maximum de δ/L = 0,15.

3. Plaquette de coupe pour tourner selon la revendication 1, **caractérisée en ce que** la zone de coin (7) comprend un broyeur (11) de copeaux situé dans au moins la surface supérieure (1) vers l'intérieur par rapport à l'arête (9) de coupe principale.

4. Plaquette de coupe pour tourner selon la revendication 1 ou 2, comprenant une surface supérieure le long de laquelle deux paires de bords latéraux (12) s'étendent, un cercle imaginaire inscrit (iC), ayant un diamètre (D) tangent à tous les quatre bords, **caractérisée en ce que** le rapport (L/D) entre la longueur (L) de l'arête (9) de coupe principale et le diamètre (D) du cercle est dans la plage allant de 0,01 à 0,45.

5. Plaquette de coupe pour tourner selon l'une quelconque des revendications précédentes, **caractérisée en ce que** les deux extrémités de l'arête (9) de coupe principale sont reliées aux bords latéraux (12) par au moins un bord de raclage circulaire (13, 14).

6. Plaquette de coupe pour tourner selon l'une quelconque des revendications précédentes, **caractérisée en ce que** la surface supérieure (1) et la surface inférieure sont identiques, et **en ce que** les surfaces latérales ainsi que la surface de dépouille (10) s'étendent perpendiculairement entre elles.
